**Europäisches Patentamt**

**European Patent Office**

**Office européen des brevets**

(19)

(11) Veröffentlichungsnummer: **0 178 448**
**B1**

(12) # EUROPÄISCHE PATENTSCHRIFT

(45) Veröffentlichungstag der Patentschrift:
**07.12.88**

(51) Int. Cl.⁴: **A 61 C 8/00**

(21) Anmeldenummer: **85111346.4**

(22) Anmeldetag: **07.09.85**

(54) **Zahnersatz für einen extrahierten Zahn.**

(30) Priorität: **19.09.84 DE 3434309**

(43) Veröffentlichungstag der Anmeldung:
**23.04.86 Patentblatt 86/17**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**DE-A- 2 154 272**
**DE-C- 1 088 188**
**DE-U- 7 618 511**
**FR-A- 2 204 392**
**GB-A- 2 088 722**
**US-A- 3 906 550**
**US-A- 3 934 347**

(73) Patentinhaber: **S + G IMPLANTS GMBH,**
**Grapengiesserstrasse 21, D-2400 Lübeck (DE)**

(72) Erfinder: **Grundei, Hans, Gärtnergasse 4, D-2400 Lübeck**
**(DE)**

(74) Vertreter: **Wilcken, Thomas, Dipl.-Ing. et al,**
**Musterbahn 1, D-2400 Lübeck (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Zahnersatz für einen extrahierten Zahn, bestehend aus einer in den Kieferknochen einsetzbaren konischen Wurzel und einer Zahnkrone, die mit einem Konus in eine Konusausnehmung der implantierten Wurzel einsetzbar ist.

Ein derartiger Zahnersatz für extrahierte Zähne ist aus der GB-A-2 088 722 bekannt. Ferner wird in der DE-A-26 28 485 und der DE-A-23 08 962 ein Zahnersatz beschrieben, der aus einer im Kieferknochen zu implantierenden Wurzel aus Metall und aus einer Zahnkrone besteht. Es ist weiter bekannt, die implantierte Wurzel mit einer nach oben offenen Konusausnehmung zu versehen, in die ein Konus der Zahnkrone einsetzbar ist. Die FR-A-2 204 392 offenbart eine Verbindung zweier Implantatteile durch Haftreibung.

Es ist ferner aus der DE-A-21 54 272 bekannt, einen Zahnersatz herzustellen, der aus einem vollen, konischen Kern hoher Festigkeit, welcher von einem schützenden konischen Mantel umgeben ist, und aus einer äusseren Hülle aus gesinterten Glasfäden besteht, die durch ihre porige Struktur das Einwachsen von Knochengewebe mit anschliessender Knochenbildung zulässt. Es ist äusserst schwierig, die aus gesinterten Glasfäden bestehende Aussenhülle mit der Schutzschicht und den Kern mit dieser Schutzschicht zu verbinden, so dass die Herstellung äusserst kompliziert und kostspielig ist.

Die Aufgabe der Erfindung besteht darin, einerseits die Wurzel eines Zahnersatzes unlösbar mit dem Kieferknochen und andererseits die Zahnkrone auf einfache, schnelle Weise mit der Zahnwurzel fest, aber lösbar und unverdrehbar zu verbinden.

Diese Aufgabe wird bei dem eingangs erwähnten Zahnersatz dadurch gelöst, dass die Wurzel aus einem an sich bekannten, offenzelligen, das Einwachsen von Knochengewebe mit anschliessender Knochenbildung in den Zellen zulassenden Metall besteht, dass der Konus der Zahnkrone in die mit einem dünnen, metallischen Vollwandbelag verschmolzene Konusausnehmung der Wurzel einsetzbar und durch Haftreibung mit dem Belag verbindbar ist und dass sowohl der Belag als auch der Zahnkronenkonus komplementäre Abflachungen besitzen.

Dadurch, dass die Wurzel des Ersatzzahnes aus einem offenzelligen Metall besteht und der Belag der Konusausnehmung der Wurzel ebenfalls aus einem Metall hergestellt ist, ist deren Verschmelzen zu einer Einheit auf einfache Weise ermöglicht. Durch die offenzellige Struktur der Wurzel entstehen an deren Aussenfläche scharfe Kanten, die den Kieferknochen beim Implantieren der Wurzel reizen und damit die Bildung von Knochengewebe und dessen Einwachsen in die Zellen mit anschliessender Knochenbildung anregen und beschleunigen.

Es wird damit eine unlösbare Verbindung zwischen der Wurzel und dem Kieferknochen geschaffen; die Offenzelligkeit hat aber den Nachteil, dass sich in eine obere konische Ausnehmung der implantierten Wurzel nicht mehr eine in die Ausnehmung mit einem Konus einsetzbare Zahnkrone durch Haftreibung fest verbindet, da die offenen Zellen der Wurzel diese feste Haftung verhindern. Es ist daher die Wandung der Konusausnehmung durch den dünnen metallischen Vollwandbelag begrenzt, an der der Konus der Zahnkrone einwandfrei durch Reibung haftet.

Um eine Verdrehung des Ersatzzahnes in der Konusausnehmung der Wurzel zu verhindern, ist die Konusfläche der Wurzelausnehmung ebenso wie der Konus der Zahnkrone mit je einer Abflachung versehen, die zur gegenseitigen Anlage kommen und ein Verdrehen der beiden Teile zueinander verhindern.

Die Erfindung wird nachstehend anhand der Zeichnung erläutert. Es zeigen:

Figur 1 einen senkrechten Schnitt durch den Zahnersatz nach der Erfindung,

Figur 2a einen Querschnitt nach der Linie II-II der Figur 1,

Figur 2b den gleichen Querschnitt, jedoch mit eingesetztem Konus der Zahnkrone,

Figur 3 eine Seitenansicht des Konus nach Figur 1,

Figur 4 einen der Figur 1 entsprechenden Schnitt mit abgeänderter Verbindung des Konus mit der Zahnkrone.

Der Zahnersatz für einen extrahierten Zahn besteht nach der Erfindung aus einer im Kieferknochen zu implantierenden Wurzel 1 mit offenzelliger Metallstruktur, deren Zellen das Einwachsen von Knochengewebe mit anschliessender Bildung von spongiösen Knochen zulassen. Diese Zahnwurzel ist nach Implantieren mit einer nach oben offenen Konusausnehmung 3 versehen, die mit einem dünnen vollwandigen Belag 2 versehen ist. In diese Konusausnehmung 3 ist ein Konus 4 einsetzbar, der durch Haftreibung eine feste Verbindung mit dem Belag 2 der Ausnehmung 3 eingeht. Dieser Konus 4 ist auf einer Seite mit einer Abflachung 5 versehen, gegen die ein entsprechender Wandungsteil der Wurzelausnehmung zur Anlage kommt, womit eine Verdrehung des Konus 4 in der Wurzel 1 vermieden ist.

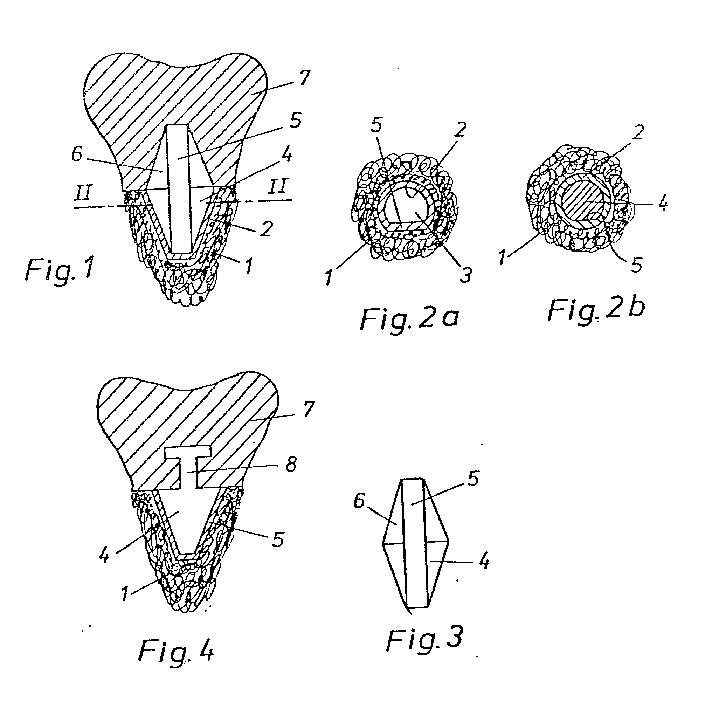

Nach Figur 1 und 3 ist mit dem Konus 4 ein nach oben gerichteter Konus 6 verbunden, der in eine entsprechende Konusausnehmung der Zahnkrone 7 ebenfalls durch Haftreibung fest verbindbar eingreift.

Es ist aber auch möglich, die Zahnkrone 7 mit dem Konus 4 durch eine Verankerung 8 (Figur 4) zu verbinden, so dass es lediglich erforderlich ist, die mit dem Konus 4 verbundene Zahnkrone 7 in die Konusausnehmung 3 der Wurzel 1 durch einfaches Einsetzen schnell und fest zu verbinden.

## Patentanspruch

Zahnersatz für einen extrahierten Zahn, bestehend aus einer in den Kieferknochen einsetzbaren konischen Wurzel (1) und einer Zahnkrone (7), die mit einem Konus (4) in eine Konusausnehmung (3) der implantierten Wurzel (1) einsetzbar ist, dadurch gekennzeichnet, dass die Wurzel (1) aus einem an sich bekannten, offenzelligen, das Einwachsen von Knochengewebe mit anschliessender Knochenbildung in den Zellen zulassenden Metall besteht, dass der Konus (4) der Zahnkrone (7) in die mit einem dünnen, metallischen Vollwandbelag (2) verschmolzene Konusausnehmung (3) der Wurzel (1) einsetzbar und durch Haftreibung mit dem Belag (2) verbindbar ist und dass sowohl der Belag (2) als auch der Zahnkronenkonus (4) komplementäre Abflachungen (5) besitzen.

## Revendications

Denture pour remplacer une dent extraite, constituée par une racine conique (1) pouvant être insérée pour le maxilaire et une cronne (7), qui peut être insérée par un cône (4) dans un évidement conique (3) de la racine implantée (1), caractérisée en ce que la racine (1) est réalisée en un métal connu en soi, à alvéoles ouvertes, autorisant la croissance du tissu osseux avec formation ultérieure d'os dans les cellules, en ce que le cône (4) de la courone (7) de la dent peut être inséré dans l'évidement conique (3) de la racine (1), auquel est fixé par fusion un revêtement métallique mince à paroi pleine (2), et peut être réuni par adhérence au revêtement (2) et en ce qu'aussi bien le revêtement (2) que le cône (4) de la couronne de·la dent possèdent des méplats complémentaires (5).

## Claim

Denture replacement for an extracted tooth, comprising a conical root (1) insertable into the jawbone and a tooth crown (7) which is insertable with a cone (4) into a conical recess (3) in the implanted root (1), characterised in that the root (1) is made from an open-celled metal, known _per se_, which allows bone tissue to grow in with consequent formation of bone in the cells, that the cone (4) of the tooth-crown (7) is insertable in the conical recess (3) fused with a thin metallic whole-wall lining of the root (1) and securable by friction to the lining (2) and in that the lining (2) and the cone (4) of the tooth-crown both have complementary flats.

Fig. 1

Fig. 2a

Fig. 2b

Fig. 4

Fig. 3